# EUROPÄISCHE PATENTANMELDUNG

(11) **EP 0 863 337 A2**
(43) Veröffentlichungstag der Anmeldung: **09.09.1998**
(21) Anmeldenummer: 98102399.7
(22) Anmeldetag: 12.02.1998
(51) Int. Cl.: F16K 1/30, F17C 13/04

(54) **Ventilarmatur für einen Druckbehälter**

(30) Priorität: 06.03.1997 DE 19709096
(71) Anmelder: VTI Ventil Technik GmbH, 58706 Menden (DE)
(72) Erfinder: Dirksmeier, Ulrich, 58706 Menden (DE); Fischer, Andreas, 58708 Menden (DE); Kamp, Franz, 58239 Schwerte (DE); Wehowsky, Wilfried, 58706 Menden (DE)
(74) Vertreter: Ksoll, Peter, Dr.-Ing.

(57) **Zusammenfassung**

Die Erfindung betrifft eine Ventilarmatur (1) für einen Druckbehälter, welcher einen Ventilkörper (2) mit einem Behälterstutzen (3) und einem Anschlußstutzen (4) aufweist, die durch einen Medienkanal (6) verbunden sind. Im Ventilkörper (2) ist ein Entnahmeventil (7) und ein Restdruckventil (8) angeordnet. Durch ein gegen einen Hauptventilsitz (12) verlagerbares Verschlußelement (10) ist der Medienkanal (6) sperrbar. Das Restdruckventil (8) umfaßt einen in einer Bohrung (15) eines Restdruckventilstutzens (16) verlagerbaren Verschlußkörper (17) mit Schließdorn (18), welcher bei Unterschreiten eines einstellbaren Mindestdrucks im Druckbehälter durch Anlage an einen Ventilsitz (22) den Medienkanal (6) sperrt. Der Verschlußkörper (12) und der Schließdorn (18) bilden einen einteiligen abgestuften Schließkolben (19), der mit einem Innenraum (29) versehen ist, welcher über eine Querbohrung (30) mit dem Medienkanal (6) in Verbindung steht. Im Behälterstutzen (3) weist der Medienkanal (6) ferner einen zur Längsachse (X-X) des Ventilkörpers (2) geneigt angeordneten Kanalabschnitt auf Der Schließkolben (19) besteht aus einem magnetischen Werkstoff, so daß das Restdrvckventil (8) durch einen von außen anlegbaren Magnetschlüssel entsperrbar ist.

## Beschreibung

Die Erfindung betrifft eine Ventilarmatur für einen Druckbehälter gemäß den Merkmalen im Oberbegriff des Anspruchs 1.

Eine derartige Ventilarmatur für Druckbehälter zählt durch die EP 0 458 253 B1 zum Stand der Technik. Druckbehälter, insbesondere Hochdruck-Gasflaschen, dienen zur Aufnahme und Lieferung von unterschiedlichen Gasen. Die Druckbehälter enthalten die Gase entweder in gasförmigem Zustand bei hohen Drücken oder beispielsweise im Falle von Kohlendioxid als unter Druck stehende Flüssigkeit. Andere Gase, z.B. Acetylen, sind unter Druck im Behälter zur Vermeidung von Explosionsgefahr in einem Aufnahmemedium, wie Aceton, gelöst.

Häufig handelt es sich um Spezialgase, die aus Sicherheitsgründen oder wegen ihrer spezifischen Verwendung, beispielsweise als Reingase in der Technik, als medizinische Gase oder als Tauchgase, nicht mit anderen Gasen oder Luft vermischt werden dürfen. Aus diesen Gründen werden die Druckbehälter mit Ventilarmaturen ausgerüstet, die integrierte Restdruckventile besitzen. Das Restdruckventil verhindert bei geöffnetem Entnahmeventil einen vollständigen Druckabbau im Behälter, sobald der Innendruck des Gases einen vorbestimmten Mindestdruck unterschreitet. Der Druckbehälter wird dann durch das Restdruckventil bis zur Wiederbefüllung verschlossen. So ist sichergestellt, daß der Druckbehälter nicht bei jeder neuen Füllung evakuiert oder gespült werden muß. Ferner verhindert das Restdruckventil das Eindringen von Fremdsubstanzen von außen.

Das Restdruckventil ist nach Art eines Rückschlagventils ausgebildet. Bei einem Innendruck höher als der eingestellte Restdruck wird es von seinem Ventilsitz abgehoben und damit geöffnet. Beim Unterschreiten des Restdrucks sperrt das Restdruckventil federbetätigt. Demgemäß muß das Restdruckventil auch bei einer Befüllung des Druckbehälters geöffnet werden.

Zur Öffnung des Restdruckventils kann dieses magnetisch entsperrt werden. Hierzu ist im Verschlußkörper des Restdruckventils ein Magnetkörper angeordnet. Mit Hilfe eines Gegenmagneten in einem sogenannten Magnetschlüssel, der von außen an die Verschlußkappe des Restdruckventils angelegt wird, kann der Verschlußkörper aus seiner Schließlage bewegt werden.

Auf diese Weise kann das Restdruckventil problemlos ohne mechanischen Eingriff nur durch Anlegen des Magnetschlüssels von außen entsperrt werden.

Die bekannte Bauart der Ventilarmatur mit Restdruckventil hat sich grundsätzlich bewährt. Es wird jedoch angestrebt, die Ventilarmatur kompakter und einfacher aufzubauen. Die Fertigung der Ventilarmatur ist aufwendig, da zwei Umleitungsbohrungen für den Anschluß des Restdruckventils an den Medienkanal erforderlich sind. Auch hinsichtlich der Montage der Einzelteile des Restdruckventils und deren Wartung scheint die bekannte Bauart verbesserungsfähig. Ferner sind vereinzelt störende Geräusche bei der Entnahme von Gas aus einem Druckbehälter festgestellt worden. Diese resultieren aus der Kanalführung in der Ventilarmatur und durch im Betrieb auftretende Schwingungen der Bauteile des Restdruckventils.

Der Erfindung liegt daher ausgehend vom Stand der Technik die Aufgabe zugrunde, eine Ventilarmatur mit Restdruckventil aufbau- und fertigungstechnisch zu vereinfachen und in der Funktion zu verbessern.

Die Lösung dieser Aufgabe besteht nach der Erfindung in den im kennzeichnenden Teil des Anspruchs 1 aufgeführten Merkmalen.

Danach weist der Verschlußkörper des Restdruckventils einen Innenraum auf, der über eine Querbohrung mit dem Abschnitt des Medienkanals zwischen dem Verschlußkörper und dem Verschlußelement des Entnahmeventils in Verbindung steht. Damit wird ein Druckausgleich zwischen der Anschlußseite der Ventilarmatur und dem Innenraum des Verschlußkörpers erreicht.

Hierdurch wird zunächst eine präzisere Justierung des Restdruckventils möglich, da das Ansprechen exakt durch die vorgegebene Federkraft bestimmt werden kann.

Desweiteren wird eine Lagestabilisierung des Verschlußkörpers ereicht, wodurch Vibrationen im Betrieb vermieden werden.

Ferner ist durch den Druckausgleich zwischen Anschlußseite und Innenraum des Verschlußstücks gewährleistet, daß das Restdruckventil nicht ohne Magnetschlüssel durch einen äußeren Druck geöffnet werden kann. Die Öffnung kann nur mit Magnetschlüssel erfolgen, dessen Öffnungskraft die Schließkraft der Druckfeder im Restdruckventil überwindet. Auf diese Weise wird die Sicherheit der Ventilarmatur erhöht, da eine unfachmännische Befüllung unterbunden und die Gefahr einer Falschbefüllung reduziert wird.

Nach den Merkmalen des Anspruchs 2 weist der Medienkanal im Behälterstutzen einen zur Längsachse des Ventilkörpers geneigt angeordneten Abschnitt auf. Durch diese Führung des Medienkanals kann eine der Umleitungsbohrungen im Ventilkörper entfallen. Hierdurch werden laminare bzw. weniger turbulente Strömungsverhältnisse bei der Entnahme von Gas erreicht. Dies wirkt sich positiv auf die Gasführung aus und Geräuschemissionen werden vermindert. Auch ist eine einfachere und rationellere Herstellung der Ventilarmatur möglich.

Eine andere Alternative der Führung des Medienkanals im Behälterstutzen ist in den Merkmalen des Anspruchs 3 charakterisiert.

Hier verläuft der Kanalabschnitt im Behälterstutzen parallel zur Längsachse des Ventilkörpers und seitlich versetzt zu dieser.

Bei dieser Ausführungsform kann ebenalls eine Umleitungsbohrung im Ventilkörper eingespart werden, was sich sowohl fertigungstechnisch als auch, wie zuvor geschildert, hinsichtlich der Gasführung vorteilhaft auswirkt. Infolge der einfacheren Fertigung ist diese Ausführungsform noch kostengünstiger.

Nach den Merkmalen des Anspruchs 4 bilden der Verschlußkörper und der Schließdorn des Restdruckventils einen einteiligen abgestuften Schließkolben. Auf diese Weise wird die erforderliche Anzahl von Einzelbauteilen des Restdruckventils verringert. Dies erleichtert die Herstellung sowie die Montage und Justierung des Restdruckventils.

Auch die Führung des Schließkolbens in der Bohrung des Restdruckventilstutzens ist präziser, so daß die Ventilarmatur insgesamt weniger störanfällig ist.

Der Schließkolben ist auf seinem Außenumfang gegenüber der Innenwand der Bohrung im Restdruckventilstutzen abgedichtet geführt (Anspruch 5).

Auch wenn die Abdichtung grundsätzlich durch eine in der Innenwand der Bohrung des Restdruckventilstutzens angeordnete Dichtung erfolgen kann, ist eine vorteilhafte Ausführungsform in den Merkmalen des Anspruchs 6 zu sehen. Danach ist eine Dichtung in eine umfangsseitige Nut des Schließkolbens eingegliedert.

Desweiteren ist gemäß den Merkmalen des Anspruchs 7 vorgesehen, daß der Schließkolben an seiner dem Ventilsitz gegenüberliegenden Rückseite eine Dichtung aufweist.

Auch wenn die Druckfeder des Restdruckventils grundsätzlich unterschiedlich positioniert sein kann, wird es nach den Merkmalen des Anspruchs 8 als besonders vorteilhaft angesehen, diese in den Innenraum des Verschlußkörpers bzw. Schließkolbens einzugliedern. Dies vereinfacht die Handhabung bei der Montage. Auch wird die Führung des Schließkolbens in der Bohrung des Restdruckventilstutzens nicht durch die Druckfeder beeinflußt. Zweckmäßigerweise ist der Innenraum zur Aufnahme der Druckfeder abgestuft.

Nach den Merkmalen des Anspruchs 9 ist der Verschlußkörper durch eine von außen einwirkende Magnetkraft bewegbar.

Hierzu kann ein entsprechendes Magnet in den Verschlußkörper integriert sein. Eine für die Praxis besonders vorteilhafte Ausführungsform besteht darin, den Verschlußkörper bzw. den Schließkolben selbst mindestens bereichsweise aus einem magnetischen Werkstoff zu bilden. Die übrigen Bauteile, wie Ventilkörper oder Verschlußkappe, bestehen dann zweckmäßigerweise aus einem solchen Werkstoff, welcher die magnetische Kraft nicht beeinflußt. Besonders diamagnetische Werkstoffe, wie Messing, Bronze oder Edelstahl, sind hierzu geeignet.

Die Erfindung ist nachfolgend unter Bezugnahme auf die Zeichnungen beschrieben, in denen jeweils eine Ventilarmatur mit Restdruckventil im Vertikalschnitt dargestellt ist.

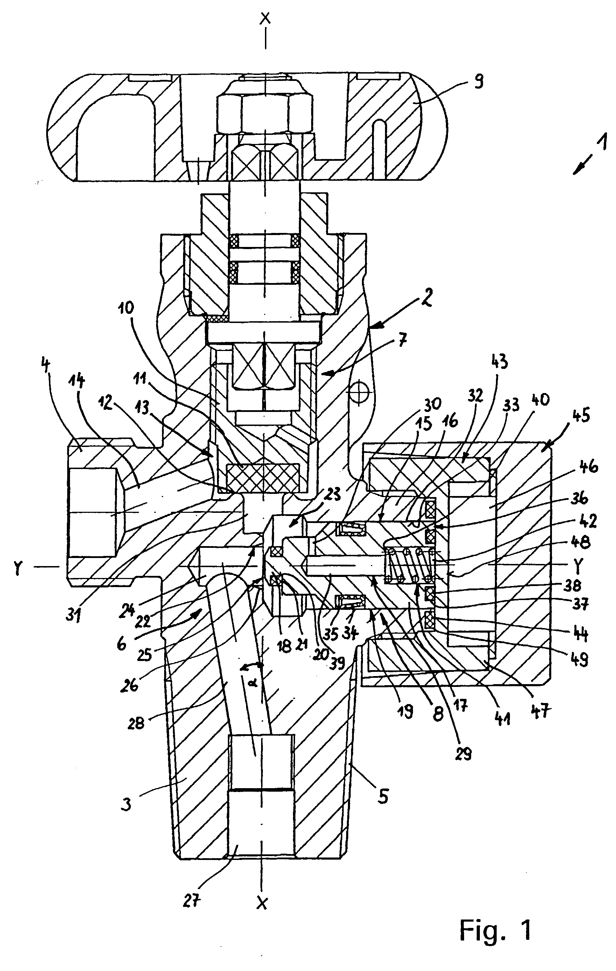

Mit 1 ist in der Figur 1 eine Ventilarmatur bezeichnet, die einem nicht näher dargestellten Druckgasbehälter (Gasflasche) zugeordnet werden kann.

Die Ventilarmatur 1 weist einen Ventilkörper 2 auf mit einem Behälterstutzen 3 und einem Anschlußstutzen 4. Zur Festlegung an einem Druckgasbehälter wird die Ventilarmatur 1 mit einem konischen Gewindeabschnitt 5 des Behälterstutzens 3 in eine entsprechende Gewindebohrung des Druckgasbehälters dicht eingeschraubt. Die gasführende Verbindung zwischen Behälterstutzen 3 und Anschlußstutzen 4 wird durch einen Medienkanal 6 hergestellt.

Im Ventilkörper 2 ist ein Entnahmeventil 7 und ein Restdruckventil 8 integriert.

Die Betätigung des Entnahmeventils 7 erfolgt über ein Handrad 9. Durch Drehen des Handrads 9 kann ein Verschlußelement 10 mit eingegliederter Dichtungseinlage 11 gegen einen Hauptventilsitz 12 verlagert bzw. vom Hauptventilsitz abgehoben werden. Hierdurch wird der Medienkanal 6 gesperrt bzw. freigegeben.

Der Anschlußstutzen 4 ist quer zur Längsachse X-X des Ventilkörpers 2 angeordnet, wobei die Verbindung zum Gehäuseraum 13 des Entnahmeventils 7 über eine Schrägbohrung 14 hergestellt ist, welche Bestandteil des Medienkanals 6 bildet.

Das Restdruckventil 8 ist in einer Bohrung 15 eines seitlichen Restdruckventilstutzens 16 integriert und so ausgebildet, daß es einen Austritt von Gas bei vom Hauptventilsitz 12 abgehobenem Verschlußelement 10 verhindert, sobald der Innendruck im Druckgasbehälter einen vorgegebenen Mindestdruck von beispielsweise 3 bar unterschreitet.

Das Restdruckventil 8 umfaßt einen Verschlußkörper 17 mit einem Schließdorn 18, welche einen einteiligen abgestuften Schließkolben 19 bilden. Der Schließdorn 18 weist als Dichtungselement einen in eine umlaufende Nut 20 eingelegten Dichtring 21 auf, welcher bei Unterschreiten des Mindestdrucks am Ventilsitz 22 zur Anlage kommt.

Hierzu ist der Schließkolben 19 in der Bohrung 15 entlang der Achse Y-Y verlagerbar.

In Richtung der Achse Y-Y erweitert sich die Bohrung 15 in einen Ventilraum 23. An diesen schließt sich in der Achse Y-Y eine kurze Sitzbohrung 24 an.

An seiner in den Ventilraum 23 mündenden Öffnung 25 weist die Sitzbohrung 24 eine Fase 26 auf. Hierdurch kann der Schließdorn 18 problemlos in die Sitzbohrung 24 gleiten, so daß am Ventilsitz 22 eine fluiddichte Absperrung erfolgt.

Einlaßseitig des Behälterstutzens 3 verfügt der Medienkanal 6 über einen Einlaßabschnitt 27. Hieran schließt sich ein zur Längsachse X-X des Ventilkörpers 2 in einem Winkel α geneigt angeordneter Kanalabschnitt 28 an. Dieser mündet in die Sitzbohrung 24.

Der Verschlußkörper 17 des Schließkolbens 19 ist mit einem Innenraum 29 versehen, der über eine Querbohrung 30 mit dem Ventilraum 23 bzw. einem Abschnitt 31 des Medienkanals 6 zwischen dem Verschlußkörper 17 und dem Verschlußelement 10 in Verbindung steht. Ventilraum 23 und Abschnitt 31 münden ineinander.

Auf seinem Außenumfang 32 ist der Schließkolben 19 gegenüber der Innenwand 33 der Bohrung 15 abgedichtet geführt. Hierzu ist eine Dichtung 34 in eine umfangsseitige Nut 35 des Schließkolbens 19 eingegliedert.

Desweiteren ist der Schließkolben 19 an seiner dem Ventilsitz 22 gegenüberliegenden Rückseite 36 durch einen in einer Ringnut 37 positionierten Dichtring 38 abgedichtet.

Der Innenraum 29 des Schließkolbens 19 ist abgestuft mit einem Vorderabschnitt 39, der über eine Stufe 40 in einen rückwärtigen Abschnitt 41 größeren Durchmessers übergeht.

Im Abschnitt 41 ist eine in Richtung auf den Ventilsitz 22 wirksame Druckfeder 42 eingegliedert.

Nach außen ist der Restdruckventilstutzen 16 mit einer Verschlußkappe 43 und einer Dichtung 44 fluiddicht abgeschlossen.

Für einen Füll- oder vollständigen Entleerungsvorgang unterhalb des Restdruckes muß das Restdruckventil 8 entsperrt werden. Dies geschieht durch einen kappenartigen Magnetschlüssel 45 mit eingegliedertem Magnetkörper 46. Der Magnetschlüssel 45 wird über die Verschlußkappe 43 des Restdruckventilstutzens 16 geschoben, wobei der Magnetkörper 46 in einen stutzenförmigen Ansatz 47 der Verschlußkappe 43 eingeführt wird und an deren äußerem Boden 48 zur Anlage gelangt.

Der Schließkolben 19 besteht aus einem magnetisierbaren Werkstoff, so daß er durch die von außen wirkende Magnetkraft des Magnetschlüssels 45 gegen die Kraft der Druckfeder 42 bewegt werden kann. Auf diese Weise kann das Restdruckventil 8 ohne mechanischen Eingriff nur durch Anlegen des Magnetschlüssels 45 von außen entsperrt werden.

Der Druckbehälter kann dann bei geöffnetem Entnahmeventil 7 gefüllt oder vollständig entleert werden.

Bei der Befüllung ist das Verschlußelement 10 des Entnahmeventils 8 vom Hauptventilsitz 12 abgehoben und Versorgungsgas wird vom Anschlußstutzen 4 über den Medienkanal 6 bzw. die Schrägbohrung 14, den Gehäuseraum 13, den Abschnitt 31, den Ventilraum 23, die Sitzbohrung 24, den Kanalabschnitt 28 und Einlaßabschnitt 27 in den Druckbehälter eingefüllt. Nach der Befüllung wird das Verschlußelement 10 durch Betätigung des Handrads 9 abgesenkt, wodurch das Entnahmeventil 7 schließt. Die zur Befüllung notwendigen Versorgungsleitungen können dann vom Anschlußstutzen 4 abgekoppelt werden. Ebenso wird der Magnetschlüssel 45 entfernt. Im Medienkanal 6 unterhalb des Verschlußelements 10 steht der Gasdruck an. Durch die Querbohrung 30 ist der Gasdruck auch im Innenraum 29 wirksam.

Aufgrund des Gasdrucks und der Verhältnisse der wirksamen äußeren Fläche des Schließkolbens 19 zur Fläche im Innenraum 29 bleibt das Restdruckventil 8 in seiner Offenstellung, wie sie in der Figur 1 dargestellt ist.

Der Schließkolben 19 liegt dann mit seiner Rückseite 36 an der Innenseite 49 der Verschlußkappe 43 an, wobei die Dichtung 38 den Übertritt von Gas vermeidet.

Die Abdichtung am Außenumfang 32 des Schließkolbens 19 wird durch die Dichtung 34 erzielt. Die Dichtung 34 ist leicht verformbar, um Rauhigkeiten der Dichtflächen auszugleichen. Ferner besitzt sie eine ausreichende Festigkeit, um dem Anpreß- bzw. Innendruck standzuhalten.

Sofern der Druck im Druckbehälter unter den eingestellten Restdruck absinkt, ist die Kraft der Druckfeder 42 größer als der vom Entnahmegas aufgebrachte Gegendruck und das Restdruckventil 8 schließt. Dabei kommt der Schließdorn 18 mit seinem Dichtring 21 am Ventilsitz 22 zur Anlage und dichtet den Medienkanal 6 fluiddicht ab.

Die Kraft der Druckfeder 41 ist im Verhältnis zur Fläche des Ventilsitzes 22 so ausgelegt, daß das Restdruckventil 8 bei einem vorgegebenen Mindestdruck die Schließbewegung exakt durchführt. Zur Entsperrung des Restdruckventils 8 muß, wie beschrieben, der Magnetschlüssel 45 angelegt werden, dessen Magnetfeld in der Lage ist, mit einer entsprechend hohen Suszeptibilitätswirkung den Schließkolben 19 gegen die Kraft der Druckfeder 42 anzuziehen.

Ein Entsperren des Restdruckventils 8 ist ohne Magnetschlüssel 45 nicht möglich. Durch die Querbohrung 30 steht ein Fülldruck bei geschlossenem Restdruckventil 8 auch auf der Rückseite 35 des Schließkolbens 19 an. Infolge der dann wirksamen Flächenverhältnisse kann der Schließkolben 19 nicht durch den Fülldruck geöffnet werden. Hierzu ist die zusätzliche Kraft des Magnetschlüssels 45 notwendig. Auf diese Weise wird einer unsachgemäßen oder falschen Befüllung entgegengewirkt.

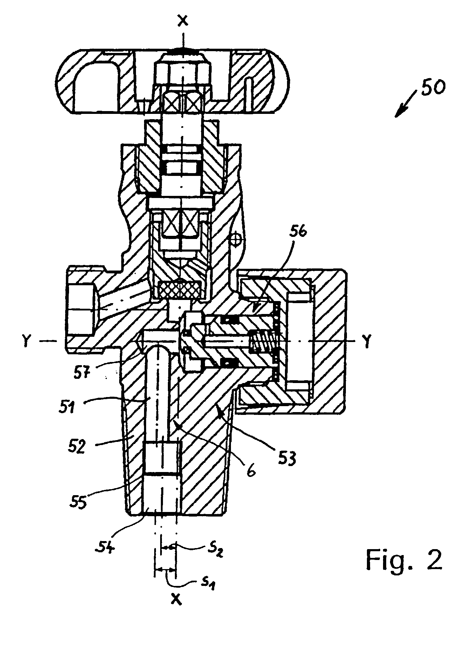

Aus der Figur 2 geht eine Ventilarmatur 50 hervor mit einem Kanalabschnitt 51 im Behälterstutzen 52, welcher parallel zur Längsachse X-X des Ventilkörpers 53 verläuft und seitlich um ein Maß s₁ zur mittleren Längsachse X-X versetzt ist.

In einer entsprechenden Anpassung ist die einen Einlaßabschnitt 54 bildende Gewindebohrung 55 seitlich gegenüber der mittleren Längsachse X-X versetzt (Maß s₂).

Der Kanalabschnitt 51 stößt dann im rechten Winkel in eine den Anschluß zum Restdruckventil 56 herstellende Sitzbohrung 57.

Ansonsten entspricht die Ventilarmatur 50 der zuvor erläuterten Ausführungsform gemäß der Figur 1. Von daher gilt eine entsprechende Bezugnahme der Bauteile.

### Bezugszeichenaufstellung

- 1: - Ventilarmatur
- 2: - Ventilkörper
- 3: - Behälterstutzen
- 4: - Anschlußstutzen
- 5: - Gewindeabschnitt
- 6: - Medienkanal
- 7: - Entnahmeventil
- 8: - Restdruckventil
- 9: - Handrad
- 10: - Verschlußelement
- 11: - Dichtungseinlage
- 12: - Hauptventilsitz
- 13: - Gehäuseraum v. 7
- 14: - Schrägbohrung
- 15: - Bohrung
- 16: - Restdruckventilstutzen
- 17: - Verschlußkörper
- 18: - Schließdorn
- 19: - Schließkolben
- 20: - Nut
- 21: - Dichtring
- 22: - Ventilsitz
- 23: - Ventilraum
- 24: - Sitzbohrung
- 25: - Öffnung
- 26: - Fase
- 27: - Einlaßabschnitt
- 28: - Kanalabschnitt
- 29: - Innenraum
- 30: - Querbohrung
- 31: - Abschnitt
- 32: - Außenumfang
- 33: - Innenwand
- 34: - Dichtung
- 35: - Nut
- 36: - Rückseite
- 37: - Ringnut
- 38: - Dichtring
- 39: - Vorderabschnitt
- 40: - Stufe
- 41: - Abschnitt
- 42: - Druckfeder
- 43: - Verschlußkappe
- 44: - Dichtung
- 45: - Magnetschlüssel
- 46: - Magnetkörper
- 47: - Ansatz
- 48: - Boden
- 49: - Innenseite
- 50: - Ventilarmatur
- 51: - Kanalabschnitt
- 52: - Behälterstutzen
- 53: - Ventilkörper
- 54: - Einlaßabschnitt
- 55: - Gewindebohrung
- 56: - Restdruckventil
- 57: - Sitzbohrung
- α: - Winkel
- s₁: - Versatzmaß v. 51
- s₂: - Versatzmaß v. 55
- X-X: - Längsachse v. 2 bzw. 53
- Y-Y: - Längsachse v. 16

## Patentansprüche

1. Ventilarmatur für einen Druckbehälter, welche einen Ventilkörper (2, 53) mit einem Behälterstutzen (3, 52) und einem Anschlußstutzen (4) aufweist, die durch einen Medienkanal (6) verbunden sind, wobei der Medienkanal (6) durch ein gegen einen Hauptventilsitz (12) verlagerbares Verschlußelement (10) eines Entnahmeventils (7) sperrbar ist und ein Restdruckventil (8, 56) mit einem in einer Bohrung (15) eines Restdruckventilstutzens (16) verlagerbaren Verschlußkörper (17) mit Schließdorn (18) vorgesehen ist, welcher bei Unterschreiten eines einstellbaren Mindestdrucks im Druckbehälter durch Anlage an einen Ventilsitz (22) den Medienkanal (6) sperrt, **dadurch gekennzeichnet**, daß der Verschlußkörper (17) mit einem Innenraum (29) versehen ist, welcher über eine Querbohrung (30) mit dem Abschnitt (31) des Medienkanals (6) zwischen dem Verschlußkörper (17) und dem Verschlußelement (10) in Verbindung steht.

2. Ventilarmatur nach Anspruch 1, **dadurch gekennzeichnet**, daß der Medienkanal (6) im Behälterstutzen (3) einen zur Längsachse (X-X) des Ventilkörpers (2) geneigt angeordneten Kanalabschnitt (28) aufweist.

3. Ventilarmatur nach Anspruch 1, **dadurch gekennzeichnet**, daß der Medienkanal (6) im Behälterstutzen (52) einen zur Längsachse (X-X) des Ventilkörpers (53) parallel angeordneten und seitlich versetzten Kanalabschnitt (51) aufweist.

4. Ventilarmatur nach einem der Ansprüche 1 bis 3, **dadurch gekennzeichnet**, daß Verschlußkörper (17) und Schließdorn (18) einen einteiligen abgestuften Schließkolben (19) bilden.

5. Ventilarmatur nach einem der Ansprüche 1 bis 3, **dadurch gekennzeichnet**, daß der Schließkolben (19) auf seinem Außenumfang (32) gegenüber der Innenwand (33) der Bohrung (15) abgedichtet geführt ist.

6. Ventilarmatur nach einem der Ansprüche 4 oder 5, **dadurch gekennzeichnet**, daß eine Dichtung (34) in einem umfangsseitige Nute (35) des Schließkolbens (19) eingegliedert ist.

7. Ventilarmatur nach einem der Ansprüche 4 bis 6, **dadurch gekennzeichnet**, daß der Schließkolben (19) an seiner dem Ventilsitz (22) gegenüberliegenden Rückseite (36) eine Dichtung (38) aufweist.

8. Ventilarmatur nach einem der Ansprüche 1 bis 7, **dadurch gekennzeichnet**, daß in den Innenraum (29) eine in Richtung auf den Ventilsitz (22) wirksame Druckfeder (42) eingegliedert ist.

9. Ventilarmatur nach einem der Ansprüche 1 bis 8, **dadurch gekennzeichnet**, daß der Verschlußkörper (17) durch eine von außen einwirkende Magnetkraft (45) bewegbar ist.
